# EUROPEAN PATENT APPLICATION

(11) **EP 3 401 412 A1**
(43) Date of publication of application: **14.11.2018**
(21) Application number: 16883724.3
(22) Date of filing: 02.12.2016
(51) Int. Cl.: C21D 9/30, C22C 38/00, C22C 38/06, C22C 38/58, F16C 3/08, B21J 5/00, B21K 1/08, C21D 1/06, C21D 8/06

(54) **LARGE CRANKSHAFT**

(30) Priority: 08.01.2016 JP 2016003012
(71) Applicant: Kabushiki Kaisha Kobe Seiko Sho (Kobe Steel, Ltd.), Kobe-shi, Hyogo 651-8585 (JP)
(72) Inventor: TAKAOKA, Hiroyuki, Takasago-shi, Hyogo 676-8670 (JP); YAMADA, Mariko, Takasago-shi, Hyogo 676-8670 (JP)
(74) Representative: Müller-Boré & Partner Patentanwälte PartG mbB
(86) International application number: PCT/JP2016/085924
(87) International publication number: WO 2017/119224

(57) **Abstract**

Provided is a large crankshaft comprising a pin fillet portion, wherein: an average initial compression stress in a surface layer region from a surface of the pin fillet portion to a depth of 500 µm is 500 Mpa or more; an average Vickers hardness of the surface of the pin fillet portion is 600 or more; an arithmetic average roughness Ra of the surface of the pin fillet portion is 1.0 µm or less; and an average prior austenite grain size of a metallographic structure is 100 µm or less. The large crankshaft has composition comprising C: 0.2% by mass to 0.4% by mass, Si: 0% by mass to 1.0% by mass, Mn: 0.2% by mass to 2.0% by mass, Al: 0.005% by mass to 0.1% by mass, N: 0.001% by mass to 0.02% by mass, and a balance being Fe and inevitable impurities.

## Description

### [TECHNICAL FIELD]

The present invention relates to a large crankshaft.

### [BACKGROUND ART]

A typical internal combustion engine converts thermal energy generated by combustion into rotational energy of a crankshaft. For example, a diesel engine, which is an internal combustion engine used in ships, power generators, etc., is provided with a large crankshaft for obtaining a great amount of output energy. Such a large crankshaft is typically formed from forged steel, and may be either integral or assembled.

Since an increase in output and a reduction in size are required for such a large diesel engine, the large crankshaft is designed to bear a load relatively large with respect to the size thereof. Specifically, the large crankshaft is required to have a high tensile strength of greater than or equal to 900 MPa, preferably greater than or equal to 1,000 MPa.

As a steel for large forged products used for forming a large crankshaft for a ship diesel engine as an example of the large crankshaft having a high tensile strength, a NiCrMo-based high-strength steel has been put into practical use (see, for example, Japanese Unexamined Patent Application, Publication Nos. 2010-248540 and 2005-344149).

A member to which a load is repeatedly applied, for example a large crankshaft, is required to have also a high fatigue strength (rupture stress in a fatigue test). Typically, the fatigue strength increases in proportion to a tensile strength of a material; however, in general, the tensile strength higher than a certain level leads to increased defect sensitivity to inclusions etc. inevitably present in the material. Accordingly, in a steel material having a relatively high tensile strength such as those disclosed in the aforementioned publications, a fatigue limit ratio (fatigue strength/tensile strength) is low and consequently the fatigue strength is limited. In other words, the conventional large crankshaft suffers from limitations in regard to a reduction in size and an increase in output of the internal combustion engine, due to the limitation in the fatigue strength.

### [PRIOR ART DOCUMENTS]

### [PATENT DOCUMENTS]

Patent Document 1: Japanese Unexamined Patent Application, Publication No. 2010-248540
Patent Document 2: Japanese Unexamined Patent Application, Publication No. 2005-344149

### [SUMMARY OF THE INVENTION]

In view of the aforementioned problems, an object of the present invention is to provide a large crankshaft having a relatively high fatigue strength.

According to one aspect of the present invention, a large crankshaft comprises a pin fillet portion, wherein: an average initial compression stress in a surface layer region from a surface of the pin fillet portion to a depth of 500 µm is greater than or equal to 500 MPa; an average Vickers hardness of the surface of the pin fillet portion is greater than or equal to 600; an arithmetic average roughness Ra of the surface of the pin fillet portion is less than or equal to 1.0 µm; and an average prior austenite grain size of a metallographic structure is less than or equal to 100 µm.

As described above, the large crankshaft of the present invention has a relatively high fatigue strength.

### [BRIEF DESCRIPTION OF THE DRAWINGS]

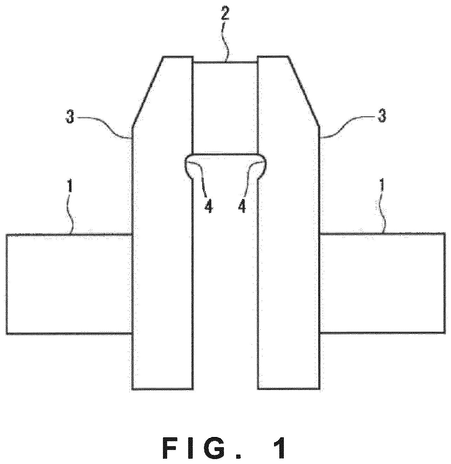

Fig. 1 is a schematic front view of a large crankshaft according to an embodiment of the present invention.

### [DESCRIPTION OF EMBODIMENTS]

Embodiments of the present invention will be explained in detail with appropriate reference to the drawings. However, the present invention is not in any way limited to these embodiments. In the drawings, denotations of reference numerals are: 1: Journal; 2: Crank pin; 3: Web; and 4: Pin fillet portion.

### Large Crankshaft

The large crankshaft according to the embodiment of the present invention illustrated in Fig. 1 includes: a plurality of journals 1 provided in parallel about the same axial center; a crank pin 2 provided eccentrically between a pair of adjacent journals 1; a web 3 that has a plate-like shape and couples adjacent crank pins 2 or adjacent journals 1; and a pin fillet portion 4 that connects between a surface of the crank pin 2 and a surface of the web 3, with a large curvature to some extent.

The large crankshaft according to the present embodiment is formed from a forging steel having composition described later in detail, and includes martensite as a major constituent. The large crankshaft may be produced by die forging.

The lower limit of an average initial compression stress (compressive residual stress at the beginning of use) in a surface layer region from a surface of the pin fillet portion 4 to a depth of 500 µm of the large crankshaft of the present embodiment is preferably 500 MPa, more preferably 550 MPa, and still more preferably 600 MPa. Meanwhile, the upper limit of the average initial compression stress in the surface layer region of the pin fillet portion 4 is not particularly limited, but may be 800 MPa, and more practically 700 MPa, as the technical limit in view of other conditions. When the average initial compression stress in the surface layer region of the pin fillet portion 4 is greater than the upper limit, generation of cracks on the pin fillet portion 4 may not be sufficiently inhibited, leading to insufficient fatigue strength. The surface layer region is defined as the range from the surface of the pin fillet portion 4 to a depth of 500 µm, since the compressive residual stress in this range contributes greatly to an increase in the fatigue strength. Although the compressive residual stress in the surface layer region of the pin fillet portion 4 gradually decreases with use, the average initial compression stress in the surface layer region of the pin fillet portion 4 may be estimated by measuring the compressive residual stress in a surface layer region of a part to which a large stress is not applied during use, for example the web 3.

The lower limit of an average Vickers hardness (Hv) of the surface of the pin fillet portion 4 is typically about 600, preferably 650, and more preferably 700. Meanwhile, the upper limit of the average Vickers hardness of the surface of the pin fillet portion 4 is not particularly limited, but may be about 1,000, and more practically about 900, as the technical limit in view of other conditions. When the average Vickers hardness of the surface of the pin fillet portion 4 is less than the lower limit, the fatigue strength, which is substantially proportional to the hardness, may be insufficient.

The lower limit of an arithmetic average roughness Ra of the surface of the pin fillet portion 4 is preferably 0.005 µm and more preferably 0.01 µm. Meanwhile, the upper limit of the arithmetic average roughness Ra of the surface of the pin fillet portion 4 is typically about 1.0 µm, preferably 0.8 µm, and more preferably 0.6 µm. When the arithmetic average roughness Ra of the surface of the pin fillet portion 4 is less than the lower limit, the production cost may be unduly increased. To the contrary, when the arithmetic average roughness Ra of the surface of the pin fillet portion 4 is greater than the upper limit, cracks may be more likely to be generated due to microscopic concentration of stress, leading to insufficient fatigue strength.

The present inventors have found that, when an average prior austenite grain size in a metallographic structure of the large crankshaft of the present embodiment is smaller, fatigue characteristics are more likely to be improved by a nitriding treatment. As a result of a further investigation based on this new finding, the lower limit of the average prior austenite grain size in the metallographic structure of the large crankshaft is preferably 10 µm and more preferably 20 µm. Meanwhile, the upper limit of the average prior austenite grain size in the metallographic structure of the large crankshaft is typically about 100 µm, preferably 80 µm, and more preferably 70 µm. When the average prior austenite grain size in the metallographic structure of the large crankshaft is less than the lower limit, the fatigue strength may be rather insufficient due to an increase in pro-eutectoid ferrite. To the contrary, when the average prior austenite grain size in the metallographic structure of the large crankshaft is greater than the upper limit, the fatigue strength may be insufficient.

The lower limit of the tensile strength of the large crankshaft of the present embodiment is preferably 900 MPa, more preferably 950 MPa, and still more preferably 1,000 MPa. When the tensile strength of the large crankshaft is less than the lower limit, insufficient mechanical strength may lead to insufficient reliability of an engine including the large crankshaft. The tensile strength is measured pursuant to JIS-Z2241 (2011).

The lower limit of a Charpy impact value (absorbed energy) of the large crankshaft of the present embodiment is preferably 50 J and more preferably 80 J. When the Charpy impact value of the large crankshaft is less than the lower limit, insufficient toughness may lead to insufficient reliability of the engine including the large crankshaft. The Charpy impact value is measured pursuant to JIS-Z2242 (2005).

The lower limit of the fatigue strength of the large crankshaft of the present embodiment is preferably 500 MPa and more preferably 550 MPa. When the fatigue strength of the large crankshaft is less than the lower limit, durability of the engine including the large crankshaft may be insufficient. The fatigue strength is measured pursuant to JIS-Z2274 (1978). The constitution of the forging steel for forming the large crankshaft of the present embodiment will be described hereinafter.

### Forging Steel

The forging steel for forming the large crankshaft of the present embodiment preferably has composition comprising (consisting of) C (carbon): greater than or equal to 0.2% by mass and less than or equal to 0.4% by mass, Si (silicon): greater than or equal to 0% by mass and less than or equal to 1.0% by mass, Mn (manganese): greater than or equal to 0.2% by mass and less than or equal to 2.0% by mass, Al (aluminum): greater than or equal to 0.005% by mass and less than or equal to 0.1% by mass, N (nitrogen): greater than or equal to 0.001% by mass and less than or equal to 0.02% by mass, and a balance being Fe (iron) and inevitable impurities.

The forging steel for forming the large crankshaft of the present embodiment preferably further contains, in addition to the aforementioned composition, at least one of Cu (copper): greater than or equal to 0.1% by mass and less than or equal to 2% by mass, Ni (nickel): greater than or equal to 0.1% by mass and less than or equal to 2% by mass, Cr (chromium): greater than or equal to 0.1% by mass and less than or equal to 2.5% by mass, Mo (molybdenum): greater than or equal to 0.1% by mass and less than or equal to 1% by mass, and V (vanadium): greater than or equal to 0.01% by mass and less than or equal to 0.5% by mass.

Next, in regard to the metallic element composition as an example of the forging steel for forming the large crankshaft of the present embodiment, numerical ranges and grounds therefor will be described.

### (C: greater than or equal to 0.2% by mass and less than or equal to 0.4% by mass)

The lower limit of a content of carbon is preferably 0.2% by mass and more preferably 0.3% by mass. Meanwhile, the upper limit of the content of carbon is preferably 0.4% by mass and more preferably 0.39% by mass. Carbon improves hardenability and contributes to improvement of strength. When the content of carbon is less than the lower limit, it may be difficult to achieve sufficient hardenability and strength. To the contrary, when the content of carbon is greater than the upper limit, toughness may be drastically reduced, and inverted V segregation may be promoted in a large ingot.

### (Si: greater than or equal to 0% by mass and less than or equal to 1.0% by mass)

The lower limit of a content of silicon is not particularly limited, and may be 0% by mass and more preferably 0.1% by mass. Meanwhile, the upper limit of the content of silicon is preferably 1.0% by mass and more preferably 0.5% by mass. Silicon contributes to deoxidation and improvement of the strength. When the content of silicon is less than the lower limit, this effect may not be sufficiently produced. To the contrary, when the content of silicon is greater than the upper limit, the inverted V segregation may be significant, leading to reduced toughness.

### (Mn: greater than or equal to 0.2% by mass and less than or equal to 2.0% by mass)

The lower limit of a content of manganese is preferably 0.2% by mass and more preferably 0.5% by mass. Meanwhile, the upper limit of the content of manganese is preferably 2.0% by mass and more preferably 1.5% by mass. Manganese improves the hardenability and strength. When the content of manganese is less than the lower limit, this effect may not be produced. To the contrary, when the content of manganese is greater than the upper limit, temper embrittlement may be promoted, leading to reduced toughness.

### (Al: greater than or equal to 0.005% by mass and less than or equal to 0.1% by mass)

The lower limit of a content of aluminum is preferably 0.005% by mass and more preferably 0.008% by mass. Meanwhile, the upper limit of the content of aluminum is preferably 0.1% by mass and more preferably 0.03% by mass. Aluminum is used as a deoxidizing element. In addition, for example, aluminum generates fine compounds such as AlN (aluminum nitride), which is capable of refining crystals through hindering crystal grain growth. When the content of aluminum is less than the lower limit, these effects may not be sufficiently produced. To the contrary, when the content of aluminum is greater than the upper limit, machinability may be reduced through binding of aluminum to other elements such as oxygen to generate an oxide or an intermetallic compound.

### (N: greater than or equal to 0.001% by mass and less than or equal to 0.02% by mass)

The lower limit of a content of nitrogen is preferably 0.001% by mass and more preferably 0.003% by mass. Meanwhile, the upper limit of the content of nitrogen is preferably 0.02% by mass and more preferably 0.01% by mass. Nitrogen generates and precipitates various types of carbonitrides to improve the strength. When the content of nitrogen is less than the lower limit, the aforementioned effects may not be sufficiently produced. To the contrary, when the content of nitrogen is greater than the upper limit, the fatigue strength may be reduced due to reduced toughness.

### (Cu: greater than or equal to 0.1% by mass and less than or equal to 2% by mass)

The lower limit of a content of copper is preferably 0.1% by mass and more preferably 0.2% by mass. Meanwhile, the upper limit of the content of copper is preferably 2% by mass and more preferably 1% by mass. Coper densifies the structure to improve the strength. When the content of copper is less than the lower limit, the aforementioned effects may not be sufficiently produced. To the contrary, when the content of copper is greater than the upper limit, the fatigue strength may be insufficient due to reduced toughness.

### (Ni: greater than or equal to 0.1% by mass and less than or equal to 2% by mass)

The lower limit of a content of nickel is preferably 0.1% by mass and more preferably 0.2% by mass. Meanwhile, the upper limit of the content of nickel is preferably 2% by mass and more preferably 1.5% by mass. Nickel densifies the structure to improve the strength. When the content of nickel is less than the lower limit, the aforementioned effects may not be sufficiently produced. To the contrary, when the content of nickel is greater than the upper limit, the fatigue strength may be insufficient due to reduced toughness.

### (Cr: greater than or equal to 0.1% by mass and less than or equal to 2.5% by mass)

The lower limit of a content of chromium is preferably 0.1% by mass and more preferably 0.5% by mass. Meanwhile, the upper limit of the content of chromium is preferably 2.5% by mass and more preferably 2.2% by mass. Chromium improves the hardenability, strength and toughness. When the content of chromium is less than the lower limit, the aforementioned effects may not be sufficiently produced. To the contrary, when the content of chromium is greater than the upper limit, the toughness may be rather reduced through promoting the inverted V segregation.

### (Mo: greater than or equal to 0.1% by mass and less than or equal to 1% by mass)

The lower limit of a content of molybdenum is preferably 0.1% by mass and more preferably 0.2% by mass. Meanwhile, the upper limit of the content of molybdenum is preferably 1% by mass and more preferably 0.6% by mass. Molybdenum improves the hardenability, strength and toughness. When the content of molybdenum is less than the lower limit, the aforementioned effects may not be sufficiently produced, and the inverted V segregation may be promoted. To the contrary, when the content of molybdenum is greater than the upper limit, microsegregation may be promoted and gravity segregation may be more likely to occur in a steel ingot, rather leading to reduced toughness.

### (V: greater than or equal to 0.01% by mass and less than or equal to 0.5% by mass)

The lower limit of a content of vanadium is preferably 0.01% by mass and more preferably 0.05% by mass. Meanwhile, the upper limit of the content of vanadium is preferably 0.5% by mass and more preferably 0.3% by mass. Vanadium generates and precipitates nitrides and carbides to improve the hardenability and strength. When the content of vanadium is less than the lower limit, sufficient strength may not be ensured. To the contrary, when the content of vanadium is greater than the upper limit, the toughness may be reduced through promoting generation of the microsegregation.

### (Other Elements)

The forging steel for forming the large crankshaft of the present embodiment may further contain other elements proactively within a range not leading to adverse influences on the operative effects of the aforementioned elements. The other elements are exemplified by Ti, Ca, Mg and the like. The upper limit of a total content of the other elements is preferably 0.5% by mass and more preferably 0.3% by mass. When the total content of the other elements is greater than the upper limit, the strength may be reduced through generation of a coarse inclusion.

### (Inevitable Impurities)

In the forging steel for forming the large crankshaft of the present embodiment, the balance being other than the aforementioned elements is preferably iron (Fe); however, the presence of elements such as phosphorus (P), sulfur (S), tin (Sn), and lead (Pb) in minute amounts as inevitable impurities is not excluded.

### Production Method

The large crankshaft of the present embodiment may be produced by a method comprising: casting the steel prepared to have the aforementioned composition; forging a steel ingot obtained after the casting; subjecting a forged product (workpiece) obtained after the forging to a thermal refining treatment (quenching and tempering); subjecting the workpiece obtained after the thermal refining to a nitriding treatment a plurality of times; and grinding a surface of the workpiece obtained after the nitriding treatment.

### Casting

In the casting, the steel prepared to have the aforementioned element composition is first molten by using an electric furnace, a high-frequency melting furnace, a converter furnace, or the like. Then, impurities (sulfur, oxygen, etc.) are removed (reduced) by vacuum refining or the like. After removal of the impurities, the steel is forged into an ingot.

### Forging

The forging is preferably multi-stage forging in which the cast steel obtained after the forging is forged into a cylindrical rod and then into a shape of an integrated crankshaft. Specifically, it is preferred that: a riser portion is removed from the cast steel obtained after the forging; the cast steel is heated and then forged by using, for example, a free forging press or the like; the workpiece having a cylindrical rod shape thus obtained is heated and then formed into a desired shape of a crankshaft by, for example, a CGF (Continuous Grain Flow) forging process.

In order to forge the steel within a favorable range of deformation property of the steel, a heating temperature for the cast steel is preferably greater than or equal to 1,150 °C, and more preferably greater than or equal to 1,200 °C. When the heating temperature is low, deformation resistance may be increased, leading to reduced production efficiency. A heating time period is preferably greater than or equal to 3 hrs. This heating time period is necessary for allowing the surface and the inner part of the steel ingot to have a uniform temperature. Since the heating time period is reportedly typically proportional to a square of a diameter of a workpiece, the heating time period in the production of the large crankshaft of the present embodiment is desired to be greater than or equal to 3 hrs as described above.

The forging of the cast steel into the workpiece having the cylindrical rod shape may be preferably carried out by the CGF forging process. In the CGF forging process, forging is carried out in an integral manner such that an axial center of a steel ingot corresponds to an axial center of an integral crankshaft, in order that a part prone to degradation of characteristics due to center segregation is located at an axial center for every part of the integral crankshaft. The CGF forging process is exemplified by the RR forging process and the TR forging process, both defined in JIS-B0112 (1994). These processes are preferred since a surface layer side of the crankshaft may be constituted of a part having high cleanliness, and consequently an integral crankshaft superior in the strength and fatigue characteristics is more likely to be obtained.

The RR forging process will be specifically described below as an example of the forging process.

In the RR forging, a workpiece obtained is heated to heat mold each crank throw. As a specific procedure, the cylindrical rod-shaped workpiece obtained after the step described above is first subjected to machine processing to form a workpiece for RR forging. Thereafter, the journal 1, the crank pin 2, and the pair of webs 3, which are corresponding to forming one cylinder, are partially heated and a vertical force of a press is converted into a force in a lateral direction by a wedge mechanism, whereby one cylinder is forged by simultaneously applying compression force in the lateral direction and eccentric force to the workpiece. By repeating this operation required times for the number of cylinders, a crankshaft is formed.

After the RR forging, a treatment for decomposing retained austenite (γ) contained in the forged product may take place before the thermal refining treatment (quenching and tempering treatment). Phase transformation during the thermal refining treatment contributes to formation of a finer structure; however, the retained austenite continues to exist during heating in the thermal refining treatment until a temperature exceeds the Ac1 transformation point, in the case where the retained austenite existing after the forging is stable. The retained austenite is austenite that remains from the forging heat treatment, and originally has the same orientation in the prior austenite grain after the forging. Consequently, when austenite transformation proceeds and the retained austenite is brought into contact with each other, an interface between the retained austenite does not form grain boundary. As a result, an austenite grain size after completion of the austenite transformation is as coarse as the original austenite grain size. Therefore, the treatment for decomposing the retained austenite takes place.

The treatment for decomposing the retained austenite is exemplified by an aging treatment in which the forged product is maintained with heating at a temperature less than or equal to the Ac1 transformation point (550 °C to 680 °C). A time period for maintaining with heating is greater than or equal to 5 hrs, and preferably greater than or equal to 10 hrs. Due to the aging treatment, the retained austenite is decomposed and can be reduced to less than or equal to 1% by volume. As another treatment for decomposing retained austenite, a sub-zero treatment may be employed.

### Thermal Refining Treatment

In the thermal refining treatment, the forged product is first heated gradually (at a heating rate of 30 °C/hr to 70 °C/hr) to a temperature of higher than or equal to the Ac3 transformation point (840 °C to 950 °C) and maintained for a certain time period (3 hrs to 9 hrs) before quenching. In light of inhibition of coarsening of prior austenite grain, the quenching is preferably carried out at a relatively low temperature that is higher than or equal to the Ac3 transformation point. A large product, which is accompanied by a temperature difference between outer and inner parts of the material during heating, is gradually heated to the heating temperature prior to quenching and maintained for a certain time period in order to equalize the temperature between the surface and the inner part of the steel. A required maintaining time period depends on a diameter of the steel material and the like, and a larger material requires a longer maintaining time period. Therefore, the quenching described below is performed after a sufficient maintaining time period for entirely equalizing the temperature even at the inner part of the steel material.

The quenching is carried out by using a refrigerant such as oil or a polymer to give a structure including martensite as a major constituent. In order to give such a structure, the lower limit of an average cooling rate in the quenching is preferably 3 °C/min, more preferably 5 °C/min, and still more preferably 10 °C/min. Meanwhile, the upper limit of the average cooling rate in the quenching is preferably 100 °C/min and more preferably 60 °C/min.

In the case of a large forged product, since water quenching may generate cracks, oil quenching or polymer quenching is typically employed for quenching the large crankshaft. The cooling rate in the quenching may vary depending on a size of the forged product. An average cooling rate from 800 °C to 500 °C for a crankshaft having a diameter of about 500 mm is about 20 °C/min in the case of the oil quenching, and about 50 °C/min in the case of the polymer quenching. A crankshaft having a larger diameter (for example, 1,000 mm) requires a lower cooling rate.

In quenching, the forged product is preferably cooled to 200 °C or less before annealing. By cooling to 200 °C or less, the transformation may be fully completed. Insufficient cooling causes non-transformed retained austenite to remain, leading to fluctuation in characteristics.

In the annealing, the forged product is gradually heated (at a heating rate of 30 °C/hr to 70 °C/hr) to a predetermined temperature (550 °C to 620 °C) and maintained for a certain time period (5 hrs to 20 hrs). In order to adjust the balance between strength and toughness, and to remove internal stress (residual stress) during the quenching, the annealing is carried out at 550 °C or higher. On the other hand, the annealing temperature being too high results in softening due to coarsening of carbides and recovery of dislocation structures, leading to a failure in ensuring sufficient strength. Therefore, the annealing temperature is 620 °C or lower.

### Nitriding Treatment

In the nitriding treatment, a step including: heating the workpiece obtained after the thermal refining treatment in an ammonia (NH₃) gas atmosphere; maintaining at the risen temperature for a certain time period; and then cooling is repeated twice or more. Nitrogen generated through decomposition of ammonia is thus introduced to a surface of the workpiece, and consequently imparting compression stress to the surface layer region is enabled. By carrying out the step of introducing nitrogen twice or more, introduction of a greater amount of nitrogen enables greater compression stress to be imparted, resulting in a more reliable improvement of the fatigue strength of the large crankshaft.

In a specific process of the nitriding treatment, for example, a step including: placing a large container containing the workpiece and filled with ammonia gas in a heating furnace; heating to a predetermined nitriding temperature; maintaining at the nitriding temperature for a certain time period; and then furnace cooling is repeated.

The lower limit of the nitriding temperature is preferably 470 °C and more preferably 500 °C. Meanwhile, the upper limit of the nitriding temperature is preferably 580 °C and more preferably 550 °C. When the nitriding temperature is lower than the lower limit, thermal decomposition of ammonia may not take place, leading to a failure in introduction of nitrogen to the workpiece. To the contrary, when the nitriding temperature is higher than the upper limit, the structure of the workpiece may be austenized, leading to a reduction in strength.

The lower limit of a maintaining time period of the nitriding temperature is preferably 15 hrs and more preferably 20 hrs. Meanwhile, the upper limit of the maintaining time period of the nitriding temperature is preferably 60 hrs and more preferably 40 hrs. When the maintaining time period of the nitriding temperature is shorter than the lower limit, introduction of nitrogen may be insufficient, leading to an insufficient improvement of the fatigue strength. To the contrary, when the maintaining time period of the nitriding temperature is longer than the upper limit, the production cost may be unduly increased.

### Grinding

In the grinding, finishing machine processing is executed by grinding a surface of the pin fillet portion 4 and the like, for example, of the workpiece obtained after the nitriding treatment. When the arithmetic average roughness Ra of the surface of the pin fillet portion 4 falls within the above range due to the grinding, microscopic concentration of stress can be less likely to occur, resulting in a further improvement of the fatigue strength of the large crankshaft. A thickness of the surface of the workpiece to be removed in the grinding is such a thickness that enables the compressive residual stress imparted to the surface layer region through introduction of nitrogen in the nitriding treatment to be substantially retained, and the specific upper limit is about 10 µm.

### Other Embodiments

The above-described embodiment does not limit the constitution of the present invention. Therefore, constitutive elements of each part of the above-described embodiment may be omitted, replaced, or added based on the descriptions of the present specification and the common technical knowledge, and such omission, replacement, and addition should be construed as falling within the scope of the present invention.

The large crankshaft of the present embodiment may be provided with a plurality of crank pins and a plurality of pairs of webs.

The large crankshaft of the present embodiment may be either an integral crankshaft in which a crank pin, a web and a journal are integrally forged, or an assembled crankshaft in which a journal is shrink-fitted to a crank pin and a web being integrally forged.

Various modes of techniques have been disclosed herein as in the foregoing. Of these, principal techniques will be summarized below.

According to the aspect of the present invention, the large crankshaft comprises the pin fillet portion, wherein: an average initial compression stress in the surface layer region from the surface of the pin fillet portion to a depth of 500 µm is greater than or equal to 500 MPa; an average Vickers hardness of the surface of the pin fillet portion is greater than or equal to 600; an arithmetic average roughness Ra of the surface of the pin fillet portion is less than or equal to 1.0 µm; and an average prior austenite grain size of the metallographic structure is less than or equal to 100 µm.

In the large crankshaft, due to the average initial compression stress in the surface layer region from a surface of the pin fillet portion to a depth of 500 µm, in which concentration of stress is most likely to occur, being greater than or equal to the aforementioned lower limit, an increase in the fatigue limit ratio is enabled even when the tensile strength is great, and consequently a crack is less likely to be generated in the pin fillet portion, resulting in a relative increase in the fatigue strength as a whole. Furthermore, in the large crankshaft, due to the average Vickers hardness and the arithmetic average roughness Ra of the surface of the pin fillet portion, as well as the average prior austenite grain size in the metallographic structure each falling within the aforementioned range, a further increase in the fatigue strength is enabled through a synergetic effect with the average initial compression stress in the surface layer region being greater than or equal to the aforementioned lower limit. It is to be noted that the term "large crankshaft" as referred to means a crankshaft in which a diameter of a pin (except for a fillet portion) is greater than or equal to 200 mm. The term "average initial compression stress" as referred to means a value measured on an unused product, by a strain gauge method. The term "average Vickers hardness of surface" as referred to means a value measured pursuant to JIS-Z2244 (2009). The term "arithmetic average roughness" as referred to means a value measured pursuant to JIS-B0601 (2001). The term "average prior austenite grain size" as referred to means a value measured pursuant to JIS-G0551 (2013).

The large crankshaft of the present embodiment preferably has composition comprising (consisting of) C: greater than or equal to 0.2% by mass and less than or equal to 0.4% by mass, Si: greater than or equal to 0% by mass and less than or equal to 1.0% by mass, Mn: greater than or equal to 0.2% by mass and less than or equal to 2.0% by mass, Al: greater than or equal to 0.005% by mass and less than or equal to 0.1% by mass, N: greater than or equal to 0.001% by mass and less than or equal to 0.02% by mass, and a balance being Fe and inevitable impurities. Due to having the above composition, further increases in the tensile strength and the toughness of the large crankshaft are enabled.

The large crankshaft preferably further comprises at least one of Cu: greater than or equal to 0.1% by mass and less than or equal to 2% by mass, Ni: greater than or equal to 0.1% by mass and less than or equal to 2% by mass, Cr: greater than or equal to 0.1% by mass and less than or equal to 2.5% by mass, Mo: greater than or equal to 0.1% by mass and less than or equal to 1% by mass, and V: greater than or equal to 0.01% by mass and less than or equal to 0.5% by mass. Due to having the above composition, further improvements of the tensile strength and the toughness of the large crankshaft are enabled.

### EXAMPLES

Hereinafter, the present invention will be described in detail by way of Examples; however, the Examples should not be construed as limiting the present invention.

The effects of the invention were ascertained by forming test pieces similar to the pin fillet portion of the large crankshaft as follows, and measuring various types of physical properties as described later.

Various types of molten steel having chemical component composition shown in Table 1 below were smelted by a common smelting process and then cooled to form 100-ton steel ingots. After removing a riser portion, each steel ingot thus obtained was subjected to: heating to 1,230 °C and maintaining at the risen temperature for 5 hrs to 10 hrs; compression by using a free forging press to 1/2 in height ratio; with 90°-rotation of a center line of the ingot, forging and extension to have a cylindrical shape of 600 mm in diameter and 20,000 mm in length; forging such that a final forging temperature was as shown in Table 2; and allowing to cool in ambient air. Prior to the quenching, each workpiece allowed to cool to room temperature was heated to 550 °C to 650 °C (after reaching 500 °C, at a rate of lower than or equal to 50 °C/hr), maintained at the risen temperature for 10 hrs or more, and then furnace cooled.

Next, the quenching was carried out in a heat-treating furnace. In the quenching, each workpiece was heated to 850 °C to 950 °C at a rate of 50 °C/hr, maintained at the risen temperature for 4 hrs, and then cooled from the quenching temperature to 500 °C at an average cooling rate of 20 °C/min (at an axial center). Thereafter, as the annealing, each workpiece was heated to 600 °C, maintained at the risen temperature for 5 hrs to 15 hrs, and then air-cooled.

**Table 1**

| Test Piece No. | Elements (mass%) | | | | | | | | | | | |
|---|---|---|---|---|---|---|---|---|---|---|---|---|
| | C | Si | Mn | P | S | Cu | Ni | Cr | Mo | V | Al | N |
| 1 | 0.38 | 0.25 | 0.90 | 0.004 | 10.003 | - | 0.4 | 2.0 | 0.30 | 0.08 | 0.025 | 0.0060 |
| 2 | 0.38 | 0.25 | 0.90 | 0.004 | 0.003 | - | 0.4 | 2.0 | 0.30 | 0.08 | 0.025 | 0.0060 |
| 3 | 0.38 | 0.25 | 0.90 | 0.004 | 0.003 | - | 0.4 | 2.0 | 0.30 | 0.08 | 0.025 | 0.0060 |
| 4 | 0.37 | 0.25 | 1.00 | 0.004 | 0.003 | - | 0.5 | 2.0 | 0.33 | 0.10 | 0.025 | 0.0060 |
| 5 | 0.35 | 0.07 | 1.20 | 0.004 | 0.003 | 0.1 | 2.0 | 2.0 | 0.50 | 0.15 | 0.025 | 0.0060 |
| 6 | 0.38 | 0.25 | 0.90 | 0.004 | 0.003 | 0.3 | 0.4 | 2.0 | 0.30 | 0.08 | 0.025 | 0.0060 |
| 7 | 0.38 | 0.25 | 0.90 | 0.004 | 0.003 | - | 0.4 | 2.0 | 0.30 | 0.08 | 0.025 | 0.0060 |
| 8 | 0.38 | 0.25 | 0.90 | 0.004 | 0.003 | - | 0.4 | 2.0 | 0.30 | 0.08 | 0.025 | 0.0060 |
| 9 | 0.38 | 0.25 | 0.90 | 0.004 | 0.003 | - | 0.4 | 2.0 | 0.30 | 0.08 | 0.025 | 0.0060 |
| 10 | 0.38 | 0.25 | 0.90 | 0.004 | 0.003 | - | 0.4 | 2.0 | 0.30 | 0.08 | 0.025 | 0.0060 |
| 11 | 0.38 | 0.25 | 0.90 | 0.004 | 0.003 | - | 0.4 | 2.0 | 0.30 | 0.08 | 0.025 | 0.0060 |
| 12 | 0.38 | 0.25 | 0.90 | 0.004 | 0.003 | - | 0.4 | 2.0 | 0.30 | 0.08 | 0.025 | 0.0060 |
| 13 | 0.38 | 0.25 | 0.90 | 0.004 | 0.003 | - | 0.4 | 2.0 | 0.30 | 0.08 | 0.025 | 0.0060 |
| 14 | 0.38 | 0.25 | 0.90 | 0.004 | 0.003 | - | 0.4 | 2.0 | 0.30 | 0.08 | 0.025 | 0.0060 |
| 15 | 0.38 | 0.25 | 0.90 | 0.004 | 0.003 | - | 0.4 | 2.0 | 0.30 | 0.08 | 0.025 | 0.0060 |
| 16 | 0.38 | 0.25 | 0.90 | 0.004 | 0.003 | - | 0.4 | 2.0 | 0.30 | 0.08 | 0.025 | 0.0060 |
| 17 | 0.09 | 0.25 | 0.90 | 0.004 | 0.003 | - | 0.4 | 2.0 | 0.30 | 0.08 | 0.025 | 0.0060 |
| 18 | 0.42 | 0.25 | 0.90 | 0.004 | 0.003 | - | 0.4 | 2.0 | 0.30 | 0.08 | 0.025 | 0.0060 |
| 19 | 0.38 | 1.10 | 0.90 | 0.004 | 0.003 | - | 0.4 | 2.0 | 0.30 | 0.08 | 0.025 | 0.0060 |
| 20 | 0.38 | 0.25 | 0.18 | 0.004 | 0.003 | - | 0.4 | 2.0 | 0.30 | 0.08 | 0.025 | 0.0060 |
| 21 | 0.38 | 0.25 | 2.10 | 0.004 | 0.003 | - | 0.4 | 2.0 | 0.30 | 0.08 | 0.025 | 0.0060 |
| 22 | 0.38 | 0.25 | 0.90 | 0.004 | 0.003 | - | 0.4 | 2.0 | 0.30 | 0.08 | 0.025 | 0.0060 |
| 23 | 0.38 | 0.25 | 0.90 | 0.004 | 0.003 | - | 0.4 | 2.0 | 0.30 | 0.08 | 0.025 | 0.0060 |
| 24 | 0.38 | 0.25 | 0.90 | 0.004 | 0.003 | 0.04 | 0.4 | 2.0 | 0.30 | 0.08 | 0.025 | 0.0060 |
| 25 | 0.38 | 0.25 | 0.90 | 0.004 | 0.003 | 2.1 | 0.4 | 2.0 | 0.30 | 0.08 | 0.025 | 0.0060 |
| 26 | 0.38 | 0.25 | 0.90 | 0.004 | 0.003 | - | 0.04 | 2.0 | 0.30 | 0.08 | 0.025 | 0.0060 |
| 27 | 0.38 | 0.25 | 0.90 | 0.004 | 0.003 | - | 2.1 | 2.0 | 0.30 | 0.08 | 0.025 | 0.0060 |
| 28 | 0.38 | 0.25 | 0.90 | 0.004 | 0.003 | - | 0.4 | 0.04 | 0.30 | 0.08 | 0.025 | 0.0060 |
| 29 | 0.38 | 0.25 | 0.90 | 0.004 | 0.003 | - | 0.4 | 2.6 | 0.30 | 0.08 | 0.025 | 0.0060 |
| 30 | 0.38 | 0.25 | 0.90 | 0.004 | 0.003 | - | 0.4 | 2.0 | 0.04 | 0.08 | 0.025 | 0.0060 |
| 31 | 0.38 | 0.25 | 0.90 | 0.004 | 0.003 | - | 0.4 | 2.0 | 1.10 | 0.08 | 0.025 | 0.0060 |
| 32 | 0.38 | 0.25 | 0.90 | 0.004 | 0.003 | - | 0.4 | 2.0 | 0.30 | 0.004 | 0.025 | 0.0060 |
| 33 | 0.38 | 0.25 | 0.90 | 0.004 | 0.003 | - | 0.4 | 2.0 | 0.30 | 0.51 | 0.025 | 0.0060 |
| 34 | 0.38 | 0.25 | 0.90 | 0.004 | 0.003 | - | 0.4 | 2.0 | 0.30 | 0.08 | 0.004 | 0.0060 |
| 35 | 0.38 | 0.25 | 0.90 | 0.004 | 0.003 | - | 0.4 | 2.0 | 0.30 | 0.08 | 0.110 | 0.0060 |
| 36 | 0.38 | 0.25 | 0.90 | 0.004 | 0.003 | - | 0.4 | 2.0 | 0.30 | 0.08 | 0.025 | 0.0008 |
| 37 | 0.38 | 0.25 | 0.90 | 0.004 | 0.003 | - | 0.4 | 2.0 | 0.30 | 0.08 | 0.025 | 0.0205 |

Test pieces for the tensile test and test pieces for the Charpy impact test were cut out from the heat-treated forged products, and the tensile strength and the Charpy impact value (absorbed energy) were measured on each test piece (see Table 2).

### Tensile Strength

The tensile strength was measured pursuant to JIS-Z2241 (2011).

### Charpy Impact Value

The Charpy impact value was measured pursuant to JIS-Z2242 (2005).

Test pieces for the Ono's rotary bending test, having an annular semicircular groove similarly to the pin filler portion, was cut out from the forged product having the tensile strength of greater than or equal to 900 N/cm² and the Charpy impact value of greater than or equal to 50 J. The test piece for the rotary bending test had a shaft diameter of 6 mm, a curvature of the annular semicircular groove of 0.5 mm, and a shaft diameter of 5 mm at the groove. The test piece for the rotary bending test was heated to the temperature shown in Table 2 in an ammonia gas atmosphere, maintained at the risen temperature for 20 hrs to 40 hrs, and furnace-cooled to nitride the surface. Furthermore, the surface of the test piece for the rotary bending test was polished by using a circular positive tip "RCMT 10003 MON-RX" available from Sumitomo Electric Industries, Ltd. By regulating a travel rate (mm/rev) of the positive tip with respect to the rotating crankshaft, the arithmetic average roughness Ra of the surface was adjusted to the value shown in Table 2. The compressive residual stress (residual stress) in the surface layer region, the Vickers hardness of the surface (surface hardness), the average prior austenite grain size (prior γ grain size), and the fatigue strength were measured on the test pieces for the Ono's rotary bending test with the surface thus polished (see Table 2). On the other hand, for the forged products having the tensile strength or the Charpy impact value not satisfying the aforementioned criteria, these determinations were not carried out since the surface hardness and the like were supposed to be insufficient. It is to be noted that, "N/A" in the columns for the nitriding temperature in the table means that the nitriding treatment was not carried out.

### Arithmetic Average Roughness

The arithmetic average roughness was measured pursuant to JIS-B0601 (2001).

### Compressive Residual Stress

The compressive residual stress was measured by the strain gauge method. Specifically, the compressive residual stress was determined by: attaching a strain gauge to the surface of the test piece; releasing the residual stress by cutting out a small piece including the portion with the strain gauge; and calculating a difference in strain measured by the strain gauge before and after the cutting.

### Vickers Hardness

The Vickers hardness was measured pursuant to JIS-Z2244 (2009).

### Prior Austenite Grain Size

The crystal grain size was measured pursuant to JIS-G0551 (2013).

### Fatigue Strength

The fatigue strength was measured by using an Ono's rotary bending testing machine, pursuant to JIS-Z2274 (1978).

**Table 2**

| Test Piece No. | Final forging temperature (°C) | Tensile strength (MPa) | Charpy impact value (J) | First nitriding temperature (°C) | Second nitriding temperature (°C) | Surface roughness (µm) | Residual stress (Mpa) | Surface hardness | Prior γ grain size (µm) | Fatigue strength (Mpa) | |
|---|---|---|---|---|---|---|---|---|---|---|---|
| 1 | 800 | 979 | 97 | 500 | 530 | 0.4 | 515 | 879 | 90 | 592 | |
| 2 | 790 | 979 | 97 | 500 | 530 | 0.4 | 520 | 880 | 80 | 592 | |
| 3 | 780 | 979 | 97 | 500 | 530 | 0.5 | 615 | 615 | 70 | 592 | |
| 4 | 770 | 997 | 95 | 500 | 530 | 0.5 | 615 | 615 | 60 | 599 | |
| 5 | 760 | 1129 | 84 | 500 | 530 | 0.5 | 673 | 753 | 55 | 652 | |
| 6 | 750 | 979 | 97 | 500 | 530 | 0.4 | 655 | 762 | 45 | 592 | |
| 7 | 800 | 979 | 97 | N/A | N/A | 0.5 | Not determined | 326 | 90 | 410 | |
| 8 | 800 | 979 | 97 | N/A | N/A | 0.5 | Not determined | 326 | 90 | 420 | |
| 9 | 800 | 979 | 97 | 500 | 570 | 0.5 | 490 | 630 | 90 | 492 | |
| 10 | 800 | 979 | 97 | 600 | 500 | 0.5 | 480 | 610 | 90 | 442 | |
| 11 | 800 | 979 | 97 | 500 | 530 | 1.1 | 520 | 615 | 90 | 422 | |
| 12 | 800 | 979 | 97 | 500 | 530 | 1.2 | 510 | 620 | 90 | 422 | |
| 13 | 800 | 979 | 97 | 550 | 540 | 0.5 | 505 | 590 | 90 | 492 | |
| 14 | 800 | 979 | 97 | 550 | 550 | 0.5 | 500 | 580 | 90 | 492 | |
| 15 | 820 | 979 | 97 | 500 | 530 | 0.5 | 520 | 615 | 110 | 422 | |
| 16 | 720 | 979 | 97 | 500 | 530 | 0.5 | 510 | 620 | 130 | 422 | |
| 17 | 800 | 682 | 139 | Not determined | Not determined | Not determined | Not determined | Not determined | Not determined | Not determined | |
| 18 | 800 | 1020 | 33 | Not determined | Not determined | Not determined | Not determined | Not determined | Not determined | Not determined | |
| 19 | 800 | 915 | 44 | Not determined | Not determined | Not determined | Not determined | Not determined | Not determined | Not determined | |
| 20 | 800 | 952 | 40 | Not determined | Not determined | Not determined | Not determined | Not determined | Not determined | Not determined | |
| 21 | 800 | 1024 | 33 | Not determined | Not determined | Not determined | Not determined | Not determined | Not determined | Not determined | |
| 22 | 800 | 979 | 37 | Not determined | Not determined | Not determined | Not determined | Not determined | Not determined | Not determined | |
| 23 | 800 | 979 | 37 | Not determined | Not determined | Not determined | Not determined | Not determined | Not determined | Not determined | |
| 24 | 800 | 979 | 37 | Not determined | Not determined | Not determined | Not determined | Not determined | Not determined | Not determined | |
| 25 | 800 | 979 | 37 | Not determined | Not determined | Not determined | Not determined | Not determined | Not determined | Not determined | |
| 26 | 800 | 961 | 39 | Not determined | Not determined | Not determined | Not determined | Not determined | Not determined | Not determined | |
| 27 | 800 | 1065 | 29 | Not determined | Not determined | Not determined | Not determined | Not determined | Not determined | Not determined | |
| 28 | 800 | 917 | 44 | Not determined | Not determined | Not determined | Not determined | Not determined | Not determined | Not determined | |
| 29 | 800 | 998 | 35 | Not determined | Not determined | Not determined | Not determined | Not determined | Not determined | Not determined | |
| 30 | 800 | 958 | 39 | Not determined | Not determined | Not determined | Not determined | Not determined | Not determined | Not determined | |
| 31 | 800 | 1045 | 31 | Not determined | Not determined | Not determined | Not determined | Not determined | Not determined | Not determined | |
| 32 | 800 | 915 | 44 | Not determined | Not determined | Not determined | Not determined | Not determined | Not determined | Not determined | |
| 33 | 800 | 1340 | 11 | Not determined | Not determined | Not determined | Not determined | Not determined | Not determined | Not determined | |
| 34 | 800 | 979 | 37 | Not determined | Not determined | Not determined | Not determined | Not determined | Not determined | Not determined | |
| 35 | 800 | 979 | 37 | Not determined | Not determined | Not determined | Not determined | Not determined | Not determined | Not determined | |
| 36 | 800 | 979 | 37 | Not determined | Not determined | Not determined | Not determined | Not determined | Not determined | Not determined | |
| 37 | 800 | 979 | 37 | Not determined | Not determined | Not determined | Not determined | Not determined | Not determined | Not determined | |

As shown in Table 2, the large crankshaft is considered to have the sufficient fatigue strength of greater than or equal to 500 MPa only when: the average initial compression stress in the surface layer region is greater than or equal to 500 MPa; the average Vickers hardness of the surface is greater than or equal to 600; the arithmetic average roughness Ra of the surface is less than or equal to 1.0 µm; and the average prior austenite grain size is less than or equal to 100 µm.

The present application claims priority of Japanese Patent Application No. 2016-003012, filed on January 8, 2016, and the contents of which are incorporated herein by reference in their entirety.

In order to express the present invention, the present invention has been appropriately and fully described through the embodiments with reference to the drawings and the like; however, it would be apparent to one of ordinary skill in the art that modifications and improvements can be easily made to the embodiments. Therefore, the modified mode or the improved mode practiced by one of ordinary skill in the art is considered to be encompassed in the scope of the claims, as long as the modified mode or the improved mode does not depart from the scope described in the claims.

### [INDUSTRIAL APPLICABILITY]

The large crankshaft may be suitably used in, for example, a ship diesel engine.

## Claims

1. A large crankshaft comprising a pin fillet portion, wherein:
an average initial compression stress in a surface layer region of the pin fillet portion from a surface to a depth of 500 µm is greater than or equal to 500 MPa;
an average Vickers hardness of the surface of the pin fillet portion is greater than or equal to 600;
an arithmetic average roughness Ra of the surface of the pin fillet portion is less than or equal to 1.0 µm; and
an average prior austenite grain size of a metallographic structure is less than or equal to 100 µm.

2. The large crankshaft according to claim 1, comprising composition which comprises
C: greater than or equal to 0.2% by mass and less than or equal to 0.4% by mass,
Si: greater than or equal to 0% by mass and less than or equal to 1.0% by mass,
Mn: greater than or equal to 0.2% by mass and less than or equal to 2.0% by mass,
Al: greater than or equal to 0.005% by mass and less than or equal to 0.1% by mass,
N: greater than or equal to 0.001% by mass and less than or equal to 0.02% by mass, and
a balance being Fe and inevitable impurities.

3. The large crankshaft according to claim 2, further comprising at least one of
Cu: greater than or equal to 0.1% by mass and less than or equal to 2% by mass,
Ni: greater than or equal to 0.1% by mass and less than or equal to 2% by mass,
Cr: greater than or equal to 0.1% by mass and less than or equal to 2.5% by mass,
Mo: greater than or equal to 0.1% by mass and less than or equal to 1% by mass, and
V: greater than or equal to 0.01% by mass and less than or equal to 0.5% by mass.
